# EUROPEAN PATENT APPLICATION

(11) **EP 4 813 748 A1**
(43) Date of publication of application: **30.09.2026**
(21) Application number: 26161838.3
(22) Date of filing: 03.03.2026
(51) Int. Cl.: B60R 1/074

(54) **VISUAL RECOGNITION SUPPORT DEVICE FOR VEHICLE**

(30) Priority: 25.03.2025 JP 2025050304
(71) Applicant: Minebea AccessSolutions Inc., Miyazaki-shi, Miyazaki 880-0293 (JP)
(72) Inventor: ISOZAKI, Yusuke, Miyazaki, 880-0293 (JP); YAMASHITA, Takehito, Miyazaki, 880-0293 (JP)
(74) Representative: Deambrogi, Edgardo

(57) **Abstract**

An inner base 12 of a visual recognition support device 1 for a vehicle includes a fastening hole 12e for fixing a support shaft 5a, and a reinforcing rib 21 formed around the fastening hole 12e. The reinforcing rib 21 has a triangular shape constituted by three side portions 21a, 21b, 21c that are continuous so as to surround the fastening hole 12e.

## Description

### CROSS REFERENCE TO RELATED APPLICATION

This application claims benefit of priority to Japanese Patent Application 2025-050304, filed March 25, 2025, the entire content of which is incorporated herein by reference.

### BACKGROUND

### Technical Field:

The present invention relates to a visual recognition support device for a vehicle.

### Background Art:

In an electric retractable visual recognition support device for a vehicle, a housing that houses a visual recognition support means such as a mirror is turnable between a retracted position and a use position by electric driving with respect to a base fixed to a vehicle body. Specifically, a support shaft of an electric drive unit housed in the housing is fixed to a base.

In the electric retractable visual recognition support device for a vehicle disclosed in JP 2013-116683 A (FIG. 2(b)), a support shaft is fastened to a fastening hole provided in an inner base made of resin included in the base. The inner base is provided with a large number of long reinforcing ribs particularly around the fastening hole, thereby improving the strength of the inner base.

### SUMMARY

If a large number of long reinforcing ribs are provided on the base, the base is increased in size although the strength can be ensured.

An object of the present invention is to suppress an increase in the size of a base while ensuring necessary strength in a visual recognition support device for a vehicle.

According to an aspect of the present invention, there is provided a visual recognition support device for a vehicle including a housing that houses a visual recognition support means, a resin base attached to the vehicle, and a support shaft that rotatably supports the housing, in which the base includes a fastening hole for fixing the support shaft and a reinforcing rib formed around the fastening hole, and the reinforcing rib has a triangular shape formed of three side portions that are continuous so as to surround the fastening hole.

Since the reinforcing rib has a triangular shape which is a structurally stable shape, the strength of the resin base can be ensured with the minimum necessary reinforcing rib, and an increase in the size of the base can be suppressed. That is, it is possible to suppress an increase in the size of the base while ensuring the strength.

An insertion hole for routing a wire harness connected to the visual recognition support means to the vehicle may be provided inside the triangular reinforcing rib.

Since the reinforcing rib has a triangular shape which is a structurally stable shape, the strength can be secured by providing only the minimum necessary reinforcing rib. Therefore, the insertion hole can be set large, and the assemblability is improved.

An extending reinforcing rib extending from an inside of each of the side portions of the reinforcing rib toward the insertion hole may be provided.

With this configuration, it is possible to achieve uniformity of strength across the opposite ends and the center of each side portion of the reinforcing rib. In other words, with this configuration, the strength balance of each side portion of the reinforcing rib can be maintained.

The extending reinforcing rib may have an inclined portion at an end portion on the insertion hole side.

With this configuration, the end portion of the extending reinforcing rib on the insertion hole side does not cause demolding resistance during resin molding of the base, and thus the demolding property of the insertion hole is improved.

The reinforcing rib may include three top portions. At each top portion, two adjacent side portions among the three side portions are connected to each other, and the top portions may be disposed adjacent to an outside of the fastening hole.

According to the visual recognition support device for a vehicle of the present invention, it is possible to suppress an increase in the size of the base while ensuring the necessary strength.

### BRIEF DESCRIPTION OF DRAWINGS

FIG. 1 is a perspective view of a visual recognition support device for a vehicle according to one embodiment of the present invention as viewed from a vehicle lower rear side;
FIG. 2 is a perspective view of a base included in the visual recognition support device for a vehicle of FIG. 1 as viewed from above;
FIG. 3 is a perspective view of the visual recognition support device for a vehicle of FIG. 1 (a housing is in an exploded state);
FIG. 4 is an exploded perspective view of the base included in the visual recognition support device for a vehicle of FIG. 1;
FIG. 5 is a perspective view of an inner base included in the visual recognition support device for a vehicle of FIG. 1;
FIG. 6 is a view of FIG. 5 as viewed in the direction of arrow VI;
FIG. 7 is a view of FIG. 5 as viewed from the direction of arrow VII;
FIG. 8 is a perspective view of an inner base according to another embodiment;
FIG. 9 is a view of FIG. 8 as viewed in the direction of arrow IX; and
FIG. 10 is a view of FIG. 8 as viewed in the direction of arrow X.

### DETAILED DESCRIPTION

Hereinafter, an embodiment of the present invention will be described with reference to the accompanying drawings.

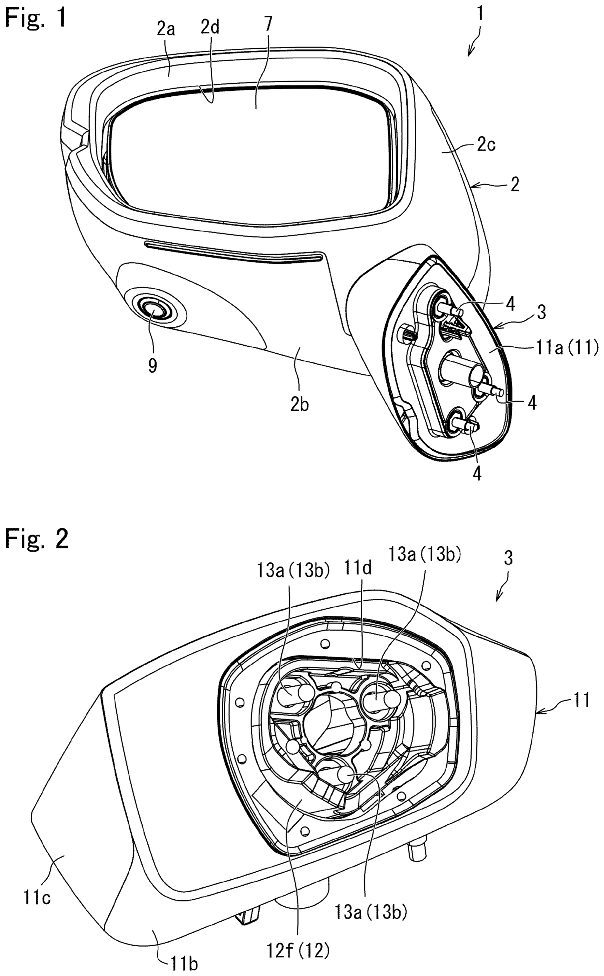

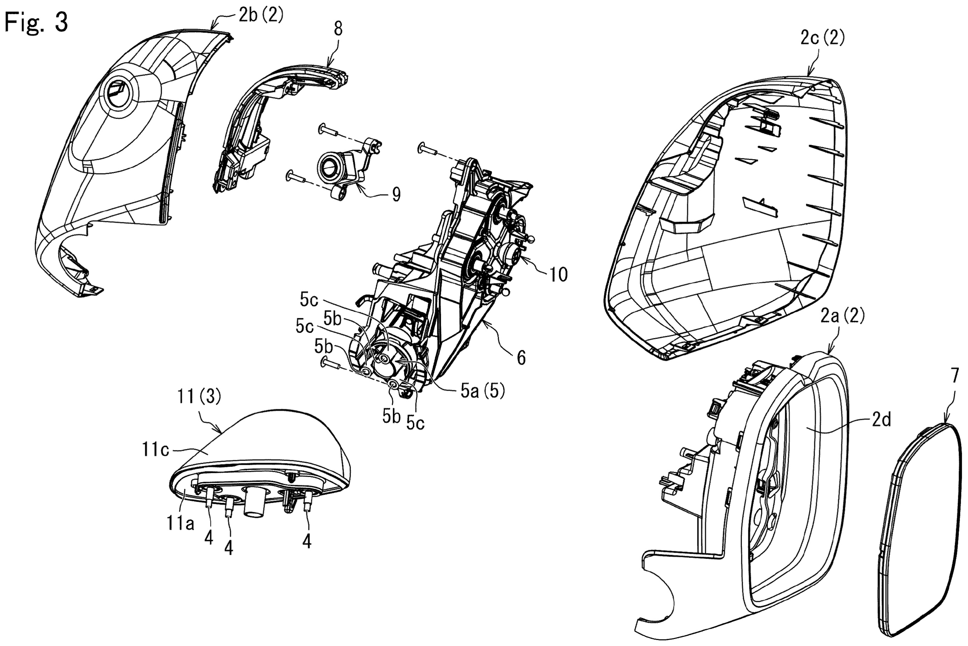

Referring to FIGS. 1 and 3, a visual recognition support device 1 for a vehicle according to an embodiment of the present invention includes a housing 2 and a base 3. The base 3 is fixed to a vehicle body (not shown) by stud bolts 4. The housing 2 is arranged on the base 3. An electric drive unit 5 for turning the housing 2 between the retracted position and the use position is held by a bracket 6 described later and is housed in the housing 2. A support shaft 5a of the electric drive unit 5 rotatably supports the housing 2, and protrudes downward in the vehicle height direction from the housing 2 and is fixed to the upper end side of the base 3. A fixing structure of the support shaft 5a of the electric drive unit 5 to the base 3 and a structure of the periphery thereof will be described in detail later.

The housing 2 has a dividable structure constituted by a plurality of components all made of resin. Specifically, the housing 2 includes a visor 2a constituting a rear side of the vehicle, a lower part 2b constituting a lower side in the vehicle height direction, and a cover 2c constituting an upper side in the vehicle height direction.

The bracket 6 is housed in the housing 2. Among the components of the housing 2, the visor 2a is fixed to the bracket 6 by screwing, and the lower part 2b and the cover 2c are engaged with the visor 2a in a disengageable manner.

A mirror 7 is housed in the housing 2 so as to be exposed to the outside through a window 2d of the visor 2a. A side turn lamp 8 is housed in the housing 2 so as to be exposed on the outer side in the vehicle width direction. Further, a camera 9 for performing multi-view imaging through the lower part 2b is housed in the housing 2. Furthermore, a mirror drive unit 10 fixed to the bracket 6 is housed in the housing 2. The mirror drive unit 10 adjusts the posture of the mirror 7.

The electric drive unit 5 is held by the bracket 6 such that the support shaft 5a protrudes to the outside of the housing 2 via the visor 2a and the lower part 2b. The support shaft 5a includes three boss portions 5c, each having a female screw hole 5b.

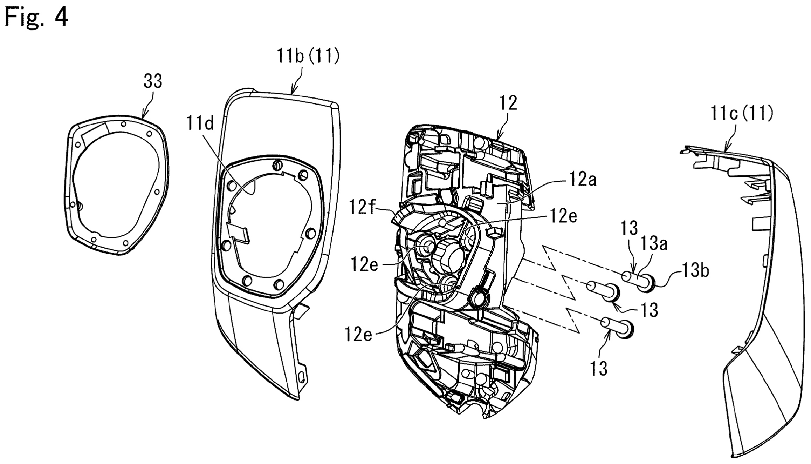

Referring to FIGS. 2 and 4, the base 3 includes a casing 11, an inner base 12, and a sealing member 33. The inner base 12 is housed in the casing 11.

The casing 11 of the base 3 has a dividable structure constituted by a plurality of components all made of resin. Specifically, the casing 11 includes a seat base 11a constituting a lower side in the vehicle height direction, an outer base 11b constituting an upper side in the vehicle height direction and a part in the vehicle width direction, and a cover base 11c constituting the remaining part in the vehicle width direction. Referring also to FIG. 3, the seat base 11a is fixed to the vehicle body (not shown) by the stud bolts 4, and the inner base 12 and the seat base 11a are screwed together by the stud bolts 4.

The outer base 11b is provided with a window 11d at a portion constituting the upper side of the casing 11 in the vehicle height direction. The inner base 12 is exposed to the outside through the window 11d.

The support shaft 5a of the electric drive unit 5 is fixed to the inner base 12. Hereinafter, the fixing structure and the structure of the periphery thereof will be described.

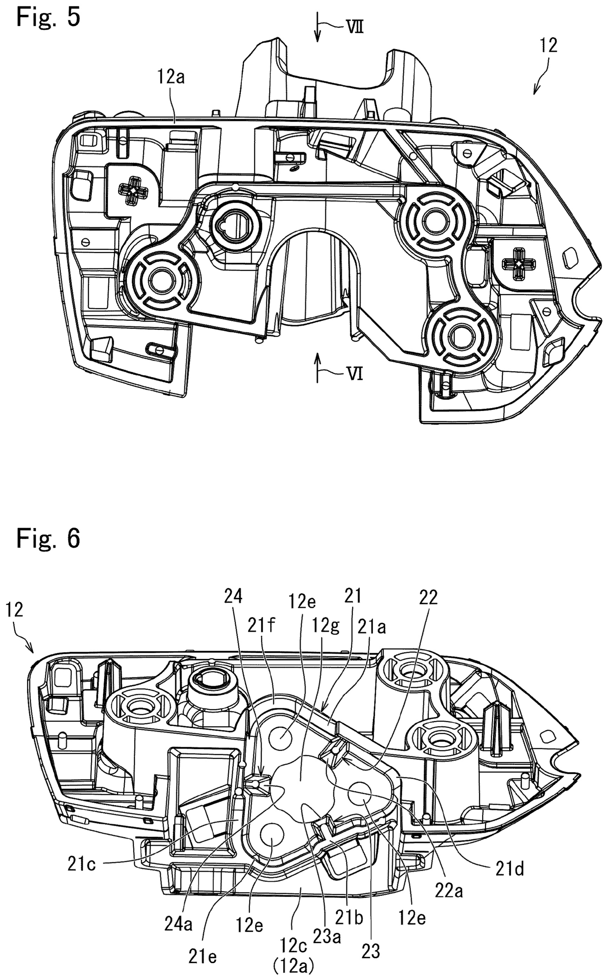

Referring to FIGS. 5 to 8, the inner base 12 includes a partition wall 12a that partitions the upper side and the lower side in the vehicle height direction. Three fastening holes 12e for fixing the support shaft 5a of the electric drive unit 5 are provided in the partition wall 12a. Each fastening hole 12e is provided to penetrate the partition wall 12a between a lower surface 12c on the lower side in the vehicle height direction and an upper surface 12d on the upper side in the vehicle height direction.

The three fastening holes 12e provided in the partition wall 12a of the inner base 12 are exposed to the outside of the casing 11 through the window 11d of the outer base 11b. The support shaft 5a of the electric drive unit 5 enters the casing 11 through the window 11d, and is fixed to the partition wall 12a of the inner base 12 by three screws 13. Specifically, male screw shafts 13a of the three screws 13 are individually inserted into the fastening holes 12e in a state where a head portion 13b is located on the lower surface 12c of the partition wall 12a. The male screw shafts 13a of the three screws 13 inserted into the fastening holes 12e in this manner are further screwed and fastened to the female screw holes 5b of the boss portions 5c provided in the support shaft 5a of the electric drive unit 5. As a result, the support shaft 5a is fixed to the partition wall 12a of the inner base 12 in a state where the partition wall 12a of the inner base 12 is sandwiched between the head portion 13b of the screw 13 and the boss portion 5c of the support shaft 5a of the electric drive unit 5.

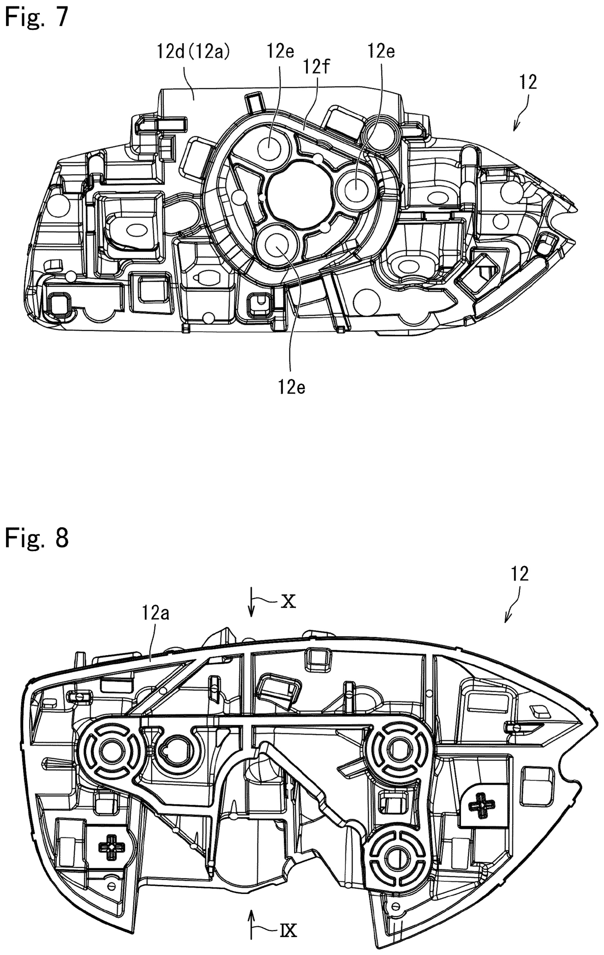

Referring to FIG. 7, a cylindrical portion 12f for regulating the turning position of the housing 2 is provided on the upper surface 12d of the partition wall 12a of the inner base 12 so as to surround the three fastening holes 12e.

Referring to FIG. 6, a reinforcing rib 21 is formed on the lower surface 12c of the partition wall 12a of the inner base 12 so as to surround the three fastening holes 12e.

The reinforcing rib 21 has a substantially triangular shape when the lower surface 12c of the partition wall 12a is viewed from front, and includes three linear side portions 21a, 21b, and 21c, and three arc-shaped top portions 21d, 21e, and 21f connecting adjacent ones of the side portions 21a to 21c. Each of the top portions 21d to 21f is disposed adjacent to the outside of any one of the three fastening holes 12e.

Since the reinforcing rib 21 has a triangular shape which is a structurally stable shape, the strength of the portion where the fastening holes 12e of the partition wall 12a of the inner base 12 made of resin is provided can be secured even if the reinforcing rib 21 is set to the minimum necessary size. That is, by providing the triangular reinforcing rib 21, it is possible to suppress an increase in the size of the inner base 12 while ensuring the necessary strength, even though the fastening holes 12e are provided in the partition wall 12a.

An insertion hole 12g for routing a wire harness (not shown) from the housing 2 side to the vehicle is provided in the partition wall 12a of the inner base 12 inside the reinforcing rib 21. Since the reinforcing rib 21 has a triangular shape which is a structurally stable shape, the strength can be secured by providing only the minimum necessary reinforcing rib 21. Therefore, the insertion hole 12g can be set large, and the assemblability is improved.

On the lower surface 12c of the partition wall 12a of the inner base 12, extending reinforcing ribs 22, 23, and 24 are provided which extend from the inside of each of the side portions 21a to 21c of the reinforcing rib 21 and the central portion in the longitudinal direction of each of the side portions 21a to 21c toward the insertion hole 12g. By providing such extending reinforcing ribs 22 to 24, it is possible to achieve uniformity of strength across the opposite ends and the center of each of the side portions 21a to 21c of the reinforcing rib 21. In other words, by providing the extending reinforcing ribs 22 to 24, the strength balance of each of the side portions 21a to 21c of the reinforcing rib 21 can be maintained.

Inclined portions 22a, 23a, and 24a are provided at end portions of the respective extending reinforcing ribs 22 to 24 on the insertion hole 12g side. By providing the inclined portions 22a to 24a, the end portions of the extending reinforcing ribs 22 to 24 on the insertion hole 12g side do not cause demolding resistance during resin molding of the inner base 12, and thus the demolding property of the insertion hole 12g is improved.

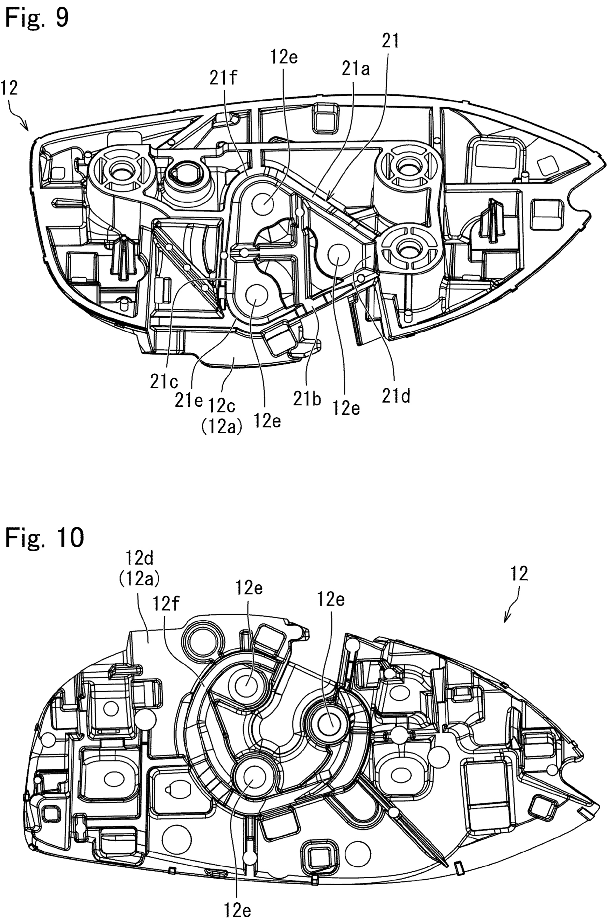

In another embodiment shown in FIGS. 8 to 10, the inner base 12 is not provided with the insertion hole 12g (see FIG. 6) and the extending reinforcing ribs 22 to 24 (also see FIG. 6).

Note that the present invention is not limited to the embodiments described above, and various modifications can be made. For example, the protruding height of the reinforcing rib 21 may be constant or may vary depending on the position. The top portions 21d to 21f of the reinforcing rib 21 may have a square shape instead of an arc shape. Further, the side portions 21a to 21c of the reinforcing rib 21 are not limited to a straight line shape, and may be a curved line shape or a meandering line shape. Further, the visual recognition support means housed in the housing may not include the mirror, and may include only the camera.

## Claims

1. A visual recognition support device for a vehicle comprising:
a housing that houses a visual recognition support means;
a resin base attached to the vehicle; and
a support shaft that rotatably supports the housing,
wherein the base includes:
a fastening hole for fixing the support shaft; and
a reinforcing rib formed around the fastening hole, and
wherein the reinforcing rib has a triangular shape formed of three side portions that are continuous so as to surround the fastening hole.

2. The visual recognition support device for a vehicle according to claim 1, wherein an insertion hole for routing a wire harness connected to the visual recognition support means to the vehicle is provided inside the triangular reinforcing rib.

3. The visual recognition support device for a vehicle according to claim 2, wherein an extending reinforcing rib extending from an inside of each of the side portions of the reinforcing rib toward the insertion hole is provided.

4. The visual recognition support device for a vehicle according to claim 3, wherein the extending reinforcing rib has an inclined portion at an end portion on the insertion hole side.

5. The visual recognition support device for a vehicle according to claim 1, wherein the reinforcing rib includes three top portions in which two adjacent side portions among the three side portions are connected to each other, the top portions being disposed adjacent to an outside of the fastening hole.
